Europäisches Patentamt

European Patent Office

Office européen des brevets

(11) Publication number: **0 225 972 B1**

# EUROPEAN PATENT SPECIFICATION

(45) Date of publication of patent specification: **11.11.92**  (51) Int. Cl.⁵: **B01D 25/12**

(21) Application number: **86111819.8**

(22) Date of filing: **23.08.86**

(54) Apparatus for vibrating filter cloth of filter press.

(30) Priority: **19.11.85 JP 260610/85**

(43) Date of publication of application:
**24.06.87 Bulletin 87/26**

(45) Publication of the grant of the patent:
**11.11.92 Bulletin 92/46**

(84) Designated Contracting States:
**CH DE FR GB LI**

(56) References cited:
**DE-A- 1 813 792**
**GB-A- 1 530 719**
**US-A- 4 558 641**

(73) Proprietor: **SUMITOMO CHEMICAL COMPANY, LIMITED**
**Kitahama 4-chome 5-33**
**Chuo-ku Osaka 541(JP)**

Proprietor: **Noritake Iron Works Co., Ltd.**
**5-6, 6-chome, Izuo Taisho-ku**
**Osaka(JP)**

(72) Inventor: **Fukuda, Yoshihiro Sumitomo**
**Chemical Company Ltd.**
**Osaka Factory 1-98, 3-chome Kasukadenaka**
**Konohana-ku Osaka(JP)**

Inventor: **Okazaki, Hiroyuki Sumitomo Chemi-**
**cal Company Ltd.**
**Osaka Factory 1-98, 3-chome Kasukadenaka**
**Konohana-ku Osaka(JP)**
Inventor: **Takashima, Ko Noritake Iron Works**
**Co. Ltd.**
**20-25, 2-chome Izuo Taisho-ku**
**Osaka(JP)**
Inventor: **Yoshizaki, Kazuo Noritake Iron**
**Works Co. Ltd.**
**20-25, 2-chome Izuo Taisho-ku**
**Osaka(JP)**

(74) Representative: **Paul, Dieter-Alfred, Dipl.-Ing.**
**Fichtestrasse 18**
**W-4040 Neuss 1(DE)**

# Description

The present invention relates to a filter press comprising the following features:

a) the filter press comprises filter plates, filter clothes and a vibrating apparatus for vibrating the filter clothes,

b) adjacent filter clothes are suspended on a pair of two opposed suspender bars respectively;

c) the suspender bars of each pair are interconnected by connecting members limiting the maximum space therebetween;

d) the vibrating apparatus has a frame, which is supported forwardly and rearwardly movable on rails disposed above the suspender bars;

e) the vibrating apparatus comprises a vibrator mounted on a vibrator mount;

f) the vibrator is connected with arresting means for the contact with the suspender bars as to transmit the vibrations to them;

g) the vibrating apparatus comprises lift means for the move of the arresting means upwardly and downwardly.

Such a filter press is known from GB-C-1 530 719 and comprises an apparatus for vibrating the filter clothes of the filter press. Therefore the apparatus is adapted to vibrate the filter cloth suspender bars and the cloth suspended therefrom, by lowering a filter cloth vibrating hammer, for example, with an air cylinder to a specified position between opposed filter plates which are opened after pressure filtration and further moving the hammer upward and downward causing the hammer to perform a circular motion in a vertical plane (do also compare JP-A-2 004 747 or EP-A-0 333 282). However, the conventional apparatus, which gives relatively mild vibration to the filter cloth, fails to shake the cake off the filter clothes effectively and quickly and to completely remove the cake before the start of the next filtration cycle, consequently posing the problem of an inefficient operation of the filter press. The conventional apparatus has another problem in that the impact of the vibrating hammer wears the filter clothes and causes damage thereto.

Furthermore this filter press is disadvantagous in that the vibrating apparatus produces a lot of noise because on the one hand the hammer is hiting against the suspender bars and on the other hand the vibration of the vibrator is transmitted to the frame of the apparatus.

US-A-3,622,005 discloses a filter press having a vibrating apparatus, the vibrator of which is positioned on a vibrator mount. For preventing the transmission of vibrations to the frame of the vibration apparatus, the vibrator mount is provided with springs in regard to the frame. The vibrator is connected with arms extending downwards, which can be brought in under-sided contact with the supporting bars of the filter clothes. By upward and downward movement of these arms by means of the vibrator it is possible to set the supporting bars vibrating so that the filter cake falls down from the filter clothes.

In the case of this construction it is of disadvantage that here only a poor transfer of the vibrations to the suspender bars is possible, particularly in such a case, if the vibrator generates vibrations at a high frequency. Accordingly the purification of the filter clothes from the filter cake is not effective.

US-A-4,558,641 also shows a filter press with a vibration apparatus. In the case of this vibration apparatus the means for the transmission of the vibrations abut merely simply under spring pretention the suspender bars from the top. An effective transmission is possible merely in case of low frequency. In addition the mechanism is very complicated, due to the fact, that it is necessary for the transmission member to carry out horizontal as well as vertical movements.

It is accordingly the object of the present invention to provide a filter press permitting high transfer of vibrations from the vibrator to the filter clothes, particularly at high frequencies and thereby producing only few noise.

According to the invention the above mentioned object is solved with the following features:

h) the vibrator and the vibrator mount are suspended on the frame in such a way that the transmission of vibrations to the frame is prevented;

i) the arresting means are movable by the lift means into the space between one pair of suspender bars and out of this space;

j) the arresting means are movable guided by actuating means away from each other as to come into pressing contact with the pair of suspender bars respectively, and towards each other as to lift them out of the space between the suspender bars.

According to the present invention, the filter cloth suspender bar arresting means is lowered to cause the means to firmly hold a pair of suspender bars, and the suspender bars and the filter cloth are then subjected to vibration of great frequency by the vibrator, so that the filter cloth can be vibrated together with the vibrator. The vibration of the vibrator is delivered effectively as amplified, so that the cake adhering to the filter cloth is subjected to highly frequent intense forward-rearward shaking-off actions during a given period of time and can be thereby removed reliably and quickly in a very short period of time, enabling the filter press to achieve a greatly improved filtration efficiency.

This effect becomes more pronouced when the filter press has an increased number of filter plates or filter chambers, i.e. a greater capacity. Since the suspender bars held by the arresting means vibrate with the vibrator, the vibration produces no noise and causes no damage to the filter cloth unlike the conventional vibrating apparatus.

In addition the production of noise is reduced by suspending the vibrator and the vibrator mount on the frame in such a way, that the transmission of vibrations to the frame is prevented, so that the frame is not caused to vibrate.

The present invention will be described in greater detail with reference to the accompanying drawings.

Fig. 1 is a front view showing a filter cloth vibrating apparatus as a first embodiment of the present invention;

Fig. 2 is a right side elevation of the same;

Fig. 3 is a fragmentary right side elevation of Fig. 2 on an enlarged scale;

Fig. 4 is a plan view of Fig. 1;

Fig 5 is a view in section taken along the line V-V in Fig. 1;

Fig. 6 is a right side elevation partly broken away and showing a filter press of the side bar type in its entirety;

Fig. 7 is a front view showing a filter cloth vibrating apparatus as a second embodiment of the present invention;

Fig. 8 is a right side elevation of the same.

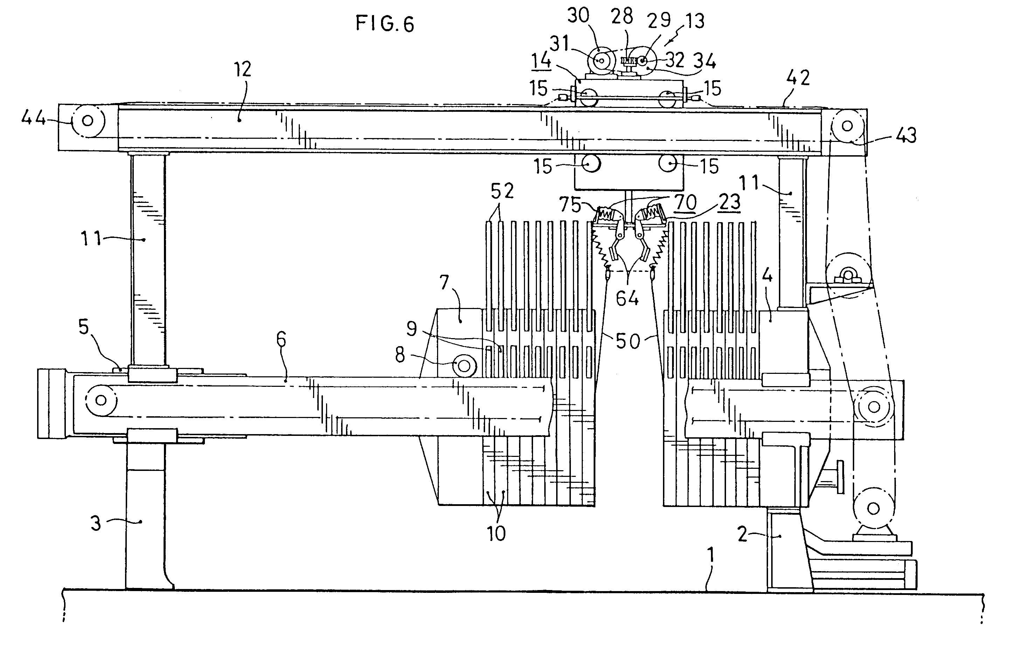

The terms "front," "rear," "right" and "left" are used herein based on Fig. 6; "front" refers to the right side of Fig. 6, "rear" to the left side of the same, "right" to the front side of the same, and "left" to the other side thereof rearwardly away from the plane of the drawing.

With reference to Fig. 6, a pair of front and rear stands 2 and 3 spaced apart at a distance and installed on the floor 1 of a factory or the like are provided with a fast head 4 and a rear head 5, respectively. These heads 4, 5 are provided on their opposite sides with a pair of horizontal side bars 6, 6. A loose head 7 is supported on the side bars 6, 6 forwardly and rearwardly movably by rollers 8, 8 on opposite sides of the head 7. When the loose head 7 is pushed forward by a hydraulic cylinder mounted on the rear head 5, a multiplicity of filter plates 10, each supported by hangers 9, 9 on the side bars 6, 6, are pressed against the fast head 4.

Two rails 12, 12, channel-shaped and positioned above the opposite sides of the filter press, are supported by posts 11, 11 extending upward from the fast head 4 and the rear head 5. A filter cloth vibrating apparatus 13 embodying the present invention is movable on the rails 12, 12.

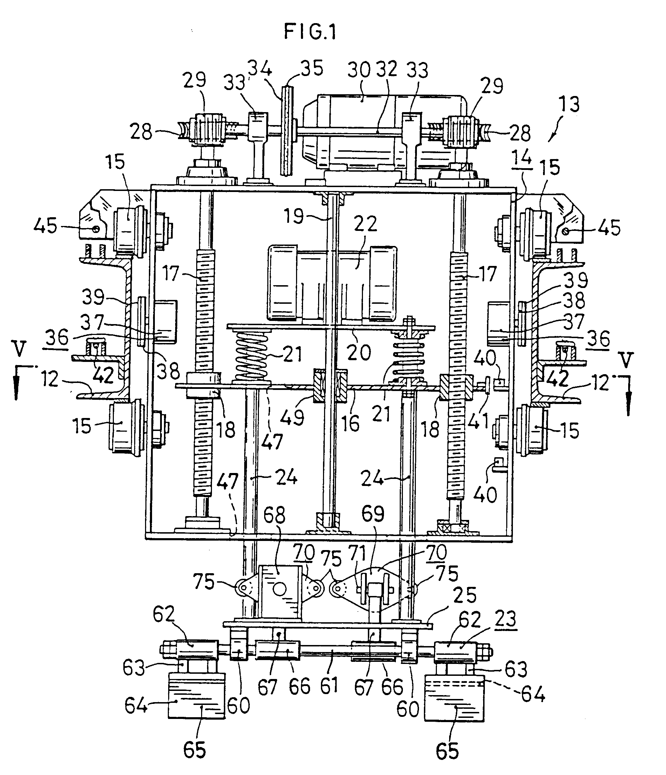

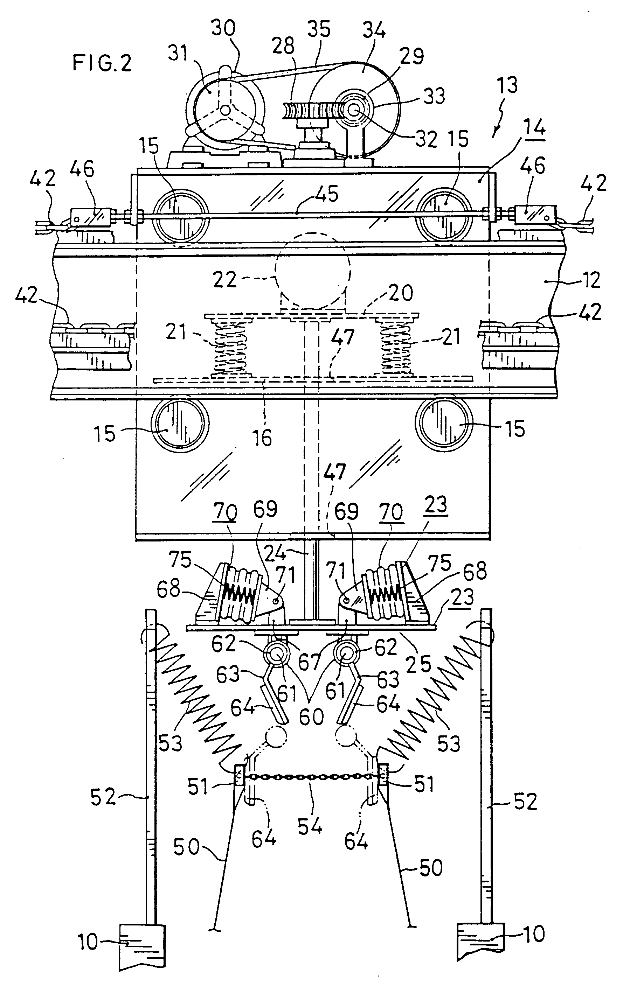

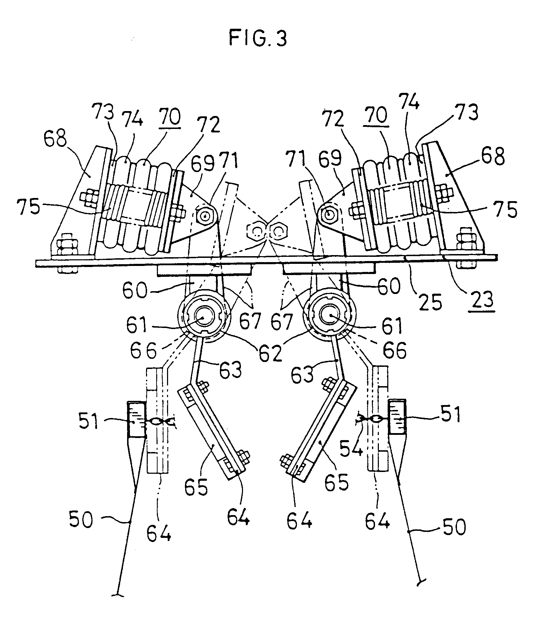

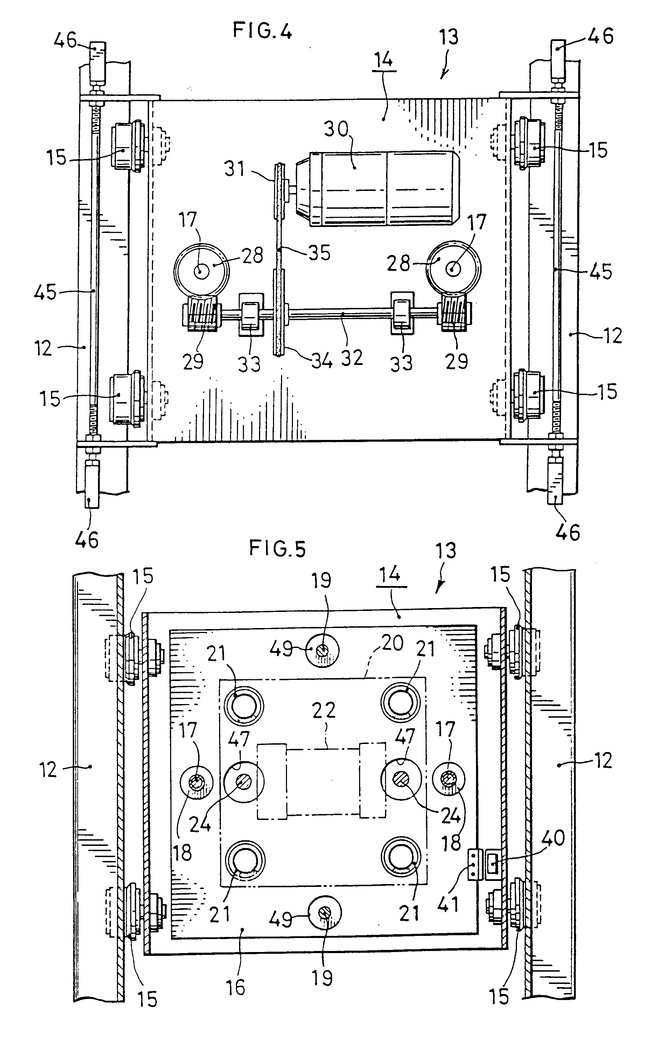

Figs. 1 to 5 show the apparatus 13 in detail.

With reference to these drawings, rollers 15, eight in total number, are rotatably attached to opposite sides of a movable frame 14 which is movable forward and rearward along the rails 12, 12. A lift member 16 in the form of a horizontal platform is provided inside the movable frame 14. The lift member 16 is upwardly and downwardly movably supported by internally threaded sleeves 18 screwed on a pair of right and left externally threaded rods 17 for driving the lift member and is guided by unthreaded sleeves 49 slidable on a pair of front and rear guide rods 19. A mount 20 having a vibrator 22 thereon is supported on the lift member 16 by four coiled springs 21. Suspended from the vibrator mount 20 is means 23 for arresting filter cloth suspender bars 51 during the operation of the vibrator 22.

A vibration motor, pneumatic vibrator, magnetic vibrator or the like is usable as the vibrator 22. The vibrator 22 produces vibration which is 2 to 50 mm, preferably 10 to 50 mm, in amplitude and 5 to 83,3 Hz (300 to 5000 vibrations per minute), preferably 11,67 to 58,33 Hz (700 to 3500 vibrations per minute), in frequency. The illustrated vibrator 22 is a vibration motor for producing vibration which is 16 mm in amplitude and 19,33 Hz (1160 vibrations per minute) in frequency.

The filter cloth suspender bar arresting means 23 has the following construction. A pair of opposite suspending rods 24 is attached to and extends downward from the lower surface of the vibrator mount 20. A horizontal plate 25 is attached to the lower ends of the suspending rods 24. Front and rear two horizontal shafts 61, 61 are rotatably supported each by a pair of right and left bearing brackets 60, 60 on the lower surface of the horizontal plate 25. A boss 62 is attached to each end of the horizontal shafts 61. Two arms 63, 63 opposed to each other longitudinally of the rail 12 and flexed away from each other are suspended from each of the front and rear pairs of the boss 62 on the shafts 61. An arresting plate 64 is fixed to the lower outside portion of each arm 63. A urethane rubber plate 65 to be brought into contact with the suspender rod 51 is affixed to the plate 64. Upright pivotal arms 67 and 67 are fixed to a right-side portion of the front horizontal shaft 61 and a left-side portion of the rear horizontal shaft 61 by bosses 66, 66, respectively. The upper ends of the pivotal arms 67, 67 are pivotably attached by pins 71, 71 to end brackets 69, 69 of front and rear two pressing pneumatic springs 70, 70 of the bellows type, respectively.These springs 70,70 are mounted on the upper side of the horizontal plate 25 by brackets 68, 68. The pressing pneumatic spring 70 comprises a pair of plates 72, 73 and a bellows 74 of rubber interconnecting these plates for admitting pressure air. A pair of coiled return springs 75, 75 are provided on opposite sides of the bellows 74 and fixed at their opposite ends to the corresponding ends of the brackets 68, 69. The means for charging and discharging the pressure air is not shown. The lift member 16 and the bottom wall of the movable frame 14 are formed with holes 47, 47 for inserting the pair of suspending rods 24 loosely therethrough.

The pair of externally threaded lift drive rods 17 are rotatably supported by, and perpendicular to, the upper and lower walls of the movable frame 14, extend through the upper wall and are provided at their upper ends with worm wheels 28, 28, respectively. A reversible brake motor 30 having a drive pulley 31 is mounted on the upper side of the upper wall of the movable frame 14. A horizontal rotary shaft 32 is mounted by a pair of opposite bearing brackets 33 on the same wall upper side. Worms 29, 29 meshing with the worm wheels 28, 28, respectively, are mounted on the rotary shaft 32 at portions thereof toward the right and left ends. A V-belt 35 is reeved around the drive pulley 31 and a transmission pulley 34 mounted on the shaft 32. A movable frame locking assembly 36 is provided on each of right and left side walls of the movable frame 14 at the midportion of its height. The locking assembly 36 comprises a small air cylinder 37 attached to the side wall inside thereof and having a piston rod extending through the side wall, and a pressure plate 38 having a rubber disk 39 and attached to the forward end of the piston rod. Upper and lower two proximity switches 40, 40 are attached to the right side wall of the movable frame 14 inside the lower portion thereof. An actuating contact plate 41 is attached to the right end of the lift member 16. A link chain 42 for moving the movable frame 14 is reeved around a pair of front and rear sprocket wheels 43, 44 provided at front and rear ends of each of the rails 12, 12. A horizontal tension bolt 45 is attached to the upper end of the frame 14 at each of its right and left sides. The link chain 42 is connected at its opposite ends to the front and rear ends of the bolt 45 by chain joints 46, 46.

The front and rear filtering surfaces of each filter plate 10 are covered with a pair of front and rear sheets of filter cloth (fabric) 50 interconnected at the prefilt feed inlet portion. An inverted L-shaped bracket 52 extends upward from the upper end of the filter plate 10 at each of its right and left sides. The suspender bar 51 attached to the upper edge of each filter sheet 50 is supported, at its opposite ends, by springs 53 suspended from the upper end horizontal portions of opposed brackets 52 of the filter plate 10. The ends of the opposed suspender bars 51 between adjacent filter plates 10 are interconnected, at each of the right and left sides of the filter press, by a connector 54 in the form of a chain and having a length shorter than the distance between the adjacent plates 10 as separated from each other. The connector 54 can be a member other than the chain, e.g., a rope.

The operation of the vibrating apparatus 13 will now be described.

After the completion of pressure filtration, the movable frame 14 of the apparatus 13 is moved by a drive mechanism which operates in timed relation with an unillustrated filter plate moving block. (This procedure will not be described in detail.) When the movable frame 14 is brought to and stopped above the intermediate space between two filter plates 10 one of which is separated from the other during the plate opening process, the air cylinders 37, 37 of the locking assemblies 36, 36 at opposite sides of the frame 14 are operated to press the pressure plates 38 against the inner surfaces of the rails 12, 12 to lock the movable frame 14. Next, the reversible brake motor 30 is driven to cause the power transmission mechanism on the upper wall of the frame 14 to rotate the pair of externally threaded lift drive rods 17, 17 at the same time to lower the lift member 16. The upper and lower limit positions of the lift member 16 are determined by adjusting the positions of the proximity switches 40, 40. After the lift member 16 is stopped at its lower limit position, air is charged into the pneumatic springs 70, 70 of the arresting means 23 to move the end brackets 69, 69 against the tension of the coiled springs 75, 75 on opposite sides of the springs 70, 70. The action of the pneumatic springs 70, 70 moves the pivotal arms 67, 67 connected to the brackets 69, 69, rotating the horizontal shafts 61, 61 and moving the arms 63, 63, which in turn open the pairs of arresting plates 64, 64 outward into pressing contact with the inner sides of the front and rear suspender bars 51, 51. Since the suspender bars 51, 51 are interconnected at their opposite ends by the pair of connectors 54, 54 which are chains, the suspender bars 51, 51 are prevented from opening away from each other beyond the length of the connectors 54, 54, with the result that the bars 51, 51 are firmly held by the arresting plates 64, 64.

Subsequently, the vibrator 22 is driven to vibrate the suspender bars 51, 51 together through the arresting means 23. As already stated, the vibrator 22 produces vibration of relatively small amplitude, for example, of 2 to 50 mm but a great frequency, while the sheets of filter cloth 50, 50 suspended from the bars 51, 51 firmly held by the arresting plates 64, 64 are not rigid, so that the vibration given to the filter cloth by the vibrator 22 is amplified. Consequently, the filter cloth is shaken to-and-fro very rapidly with an amplitude greater than the intrinsic amplitude of the vibrator 22, whereby the cake is subjected to highly frequent intense shaking-off actions for a given period of time. The cake can therefore be removed from the suspended filter clotch 50 quickly and effectively within a very short period of time. The vibration given to the filter cloth by the vibrator 22, although thus having high intensity, will produce no noise or cause no damage to the filter cloth 50 because the suspender bars 51, 51 are firmly held by the arresting means 23. The coiled springs 21 supporting the vibrator 22 on the mount 20 and serving as means for preventing transference of the vibration mitigate the vibration to be transferred to the movable frame 14.

After the cake has been completely removed, the air is discharged from the pneumatic springs 70, 70, whereupon the tension of the coiled springs 75, 75 returns the end brackets 69, 69 to the original position, moving the pivotal arms 67, 67 in a direction opposite to the above case, rotating the horizontal shafts 61, 61 and moving the flexed arms 63, 63 inward, whereby the arresting plates 64, 64 are brought out of contact with the suspender bars 51, 51 and returned to the original position. The reversible brake motor 30 is then reversely driven to raise the arresting means 23, which is subsequently stopped at its upper limit position by the action of the proximity switch 40.

The aforementioned drive mechanism is provided for moving the movable frame 14 to position the arresting means 23 between opened filter plates 10. In timed relation with the movement of the filter plate moving block for opening the filter plates 10 one after another, the movable frame 14 is moved to automatically repeat the above filter cloth vibrating operation for each filter chamber.

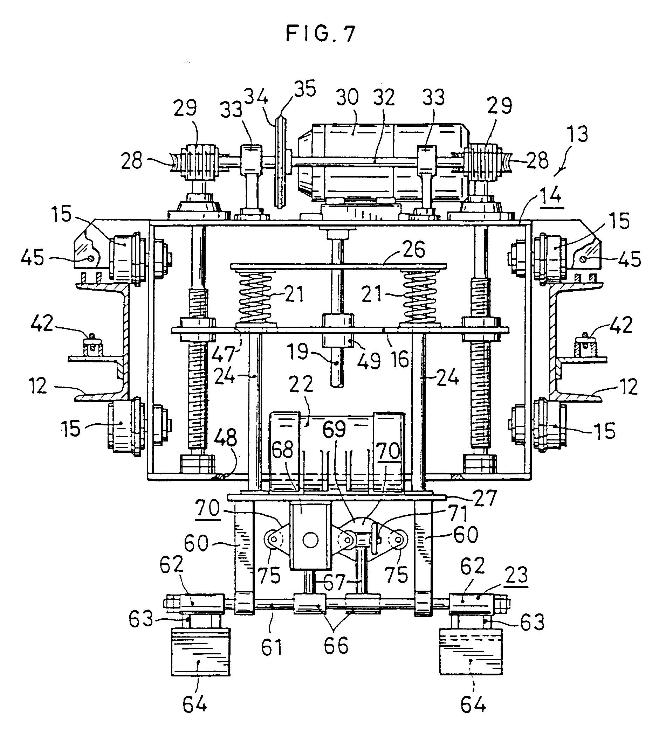

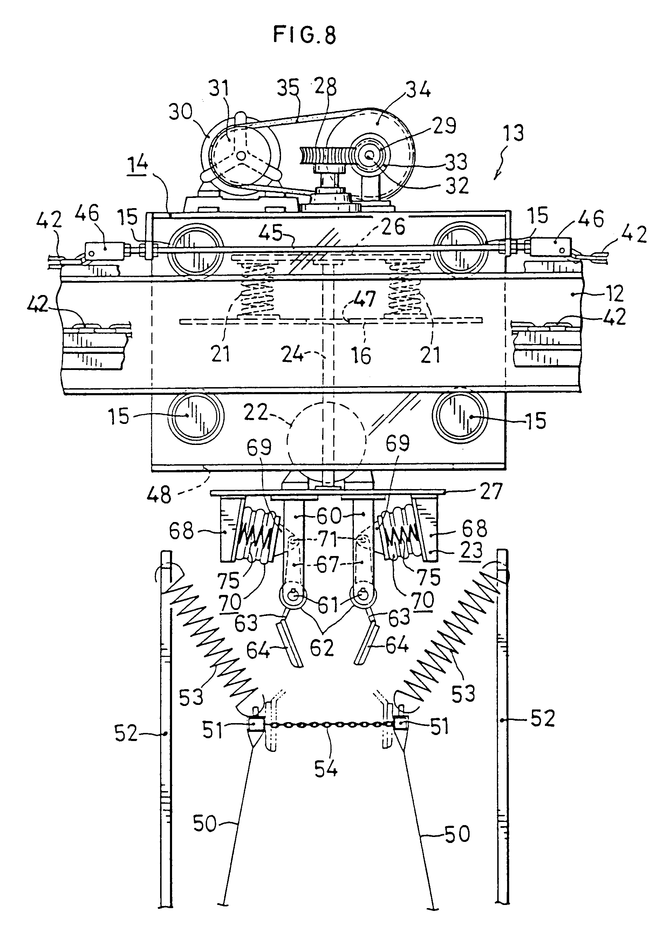

Figs. 7 and 8 show a second embodiment of the present invention, which differs from the first embodiment in the position of the vibrator 22, as well as of the bellows-type pneumatic springs 70, 70 included in the filter cloth suspender bar arresting means 23. According to the second embodiment, the vibrator 22 is not mounted on an upper horizontal plate 26 supported by coiled springs 21 on the lift member 16. The vibrator 22 is mounted on the upper surface of a lower horizontal plate 27 suspended from the upper horizontal plate 26 by suspending rods 24, 24. Accordingly, the lower wall of the movable frame 14 has an opening 48 which is so dimensioned as to pass the suspending rods 24, 24 and the vibrator 22 therethrough. The pressing pneumatic springs 70, 70 of the arresting means 23 are attached to the lower surface of the lower horizontal plate 27. The second embodiment thus constructed has the advantages that the vibrator 22, which is disposed at the lower position, lowers the position of the center of gravity, makes the movable frame 14 smaller in height and very compact and renders the filter press installable in a space of reduced height. The movable frame locking assemblies 36 and the pair of upper and lower proximity switches 40 are not shown in Figs. 7 and 8.

**Claims**

1. A filter press comprising the following features:
   a) the filter press comprises filter plates (10), filter clothes (50) and a vibrating apparatus (13) for vibrating the filter clothes (50);
   b) adjacent filter clothes (50) are suspended on a pair of two opposed suspender bars (51) respectively;
   c) the suspender bars (51) of each pair are interconnected by connecting members (54) limiting the maximum space therebetween;
   d) the vibrating apparatus (13) has a frame (14), which is supported forwardly and rearwardly moveable on rails (12) disposed above the suspender bars (51);
   e) the vibrating apparatus comprises a vibrator (22), mounted on a vibrator mount (20);
   f) the vibrator (22) is connected with arresting means (23) for the contact with the suspender bars (51) as to transmit the vibrations to them;
   g) the vibrating apparatus (13) comprises lift means (16, 17) for the move of the arresting means (23) upwardly and downwardly;
   characterized by the following features:
   h) the vibrator (22) and the vibrator mount (20) are suspended on the frame (14) in such a way that the transmission of vibrations to the frame (14) is prevented;
   i) the arresting means (23) are moveable by the lift means (16, 17) into the space between one pair of suspender bars (51) and out of this space;
   j) the arresting means (23) are moveable guided by actuating means (70) away from each other as to come into pressing contact with the pair of suspender bars (51) respectively, and towards each other as to lift them out of the space between the suspender bars (51).

2. A filter press as defined in claim 1, characterized in that the arresting means (23) are designed as a pair of pivotal arms (63) rotatable supported on horizontal shafts (61).

3. A filter press as defined in claim 1 or claim 2, characterized in that the arresting means are acted by pneumatic springs (70).

**4.** A filter press as defined in claim 3, characterized in that the pneumatic springs (70) are of the bellows type comprising a pair of plates (72, 73), a bellows (74) of rubber interconnecting these plates (72, 73) for admitting pressure air and a pair of return springs (75) provided on opposite sides to the bellows (74).

**5.** A filter press as defined in one of claims 1 through 4, characterized in that the length of the connecting members (54) is shorter that the distance beween two adjacent filter plates (10) as separated from each other.

**6.** A filter press as defined in one of claim 1 through 5, characterized in that the suspender bars (51) are supported by springs (53) suspended from opposed brackets (52) of two adjacent filter plates (10).

**7.** A filter press as defined in one of claims 1 through 6, characterized in that the vibrator (22) is mounted on a plate (20), to which the arresting means (23) are attached on the lower surface thereof.

**8.** A filter press as defined in one of claims 1 through 7, characterized in that the vibrator (22) produces vibrations having an amplitude of 2 to 50 mm and a frequency of 5 to 83,3 Hz (300 to 5000 vibrations per minute).

**9.** A filter press as defined in one of claims 1 through 8, characterized in that the means for precenting transmission of vibration to be interposed betwween the vibrator mount (20) and the lift member (16) comprise coiled springs (21).

**10.** A filter press as defined in one of claim 1 through 9, characterized in that the filter press is of the side bar type wherein the filter plates (10) are forwardly and rearwardly movably supported by a pair of opposite side bars (6).

**Patentansprüche**

**1.** Filterpresse mit folgenden Merkmalen:
a) zu der Filterpresse gehören Filterplatten (10), Filtertücher (50) und eine Vibrationsanlage (13), um die Filtertücher (50) in Schwingungen zu versetzen;
b) nebeneinanderliegende Filtertücher (50) sind jeweils an einem Paar gegenüberliegender Tragebalken (51) aufgehängt;
c) die Tragebalken (51) eines jeden Paares sind untereinander durch Verbindungselemente (54), welche den maximalen Zwischenraum zwischen ihnen begrenzen, verbunden;
d) die Vibrationsanlage (13) hat einen Rahmen (14) der vorwärts und rückwärts bewegbar auf Schienen (12), die oberhalb der Tragebalken (51) angeordnet sind, getragen ist;
e) die Vibrationsanlage weist einen Vibrator (22) auf, der auf einem Vibratorgestell (20) befestigt ist;
f) der Vibrator (22) ist mit Arretierelementen (23) für den Kontakt mit den Tragebalken (51) verbunden, um die Schwingungen an sie zu übertragen;
g) die Vibrationsanlage (13) weist eine Anhebeeinrichtung (16, 17) auf, um die Arretierelemente (23) aufwärts und abwärts zu bewegen;
gekennzeichnet durch die folgenden Merkmale:
h) der Vibrator (22) und das Vibratorgestell (20) sind an dem Rahmen (14) in der Weise aufgehängt, daß die Übertragung von Schwingungen an den Rahmen (14) verhindert wird;
i) die Arretierelemente (23) sind durch die Anhebeeinrichtung (16, 17) in den Zwischenraum zwischen einem Paar von Tragebalken (51) und aus diesem Zwischenraum heraus bewegbar;
j) die Arretierelemente (23) sind voneinander weg bewegbar durch Betätigungselemente (70) geführt, um jeweils in Preßkontakt mit dem Paar von Tragebalken (51) zu kommen, und aufeinanderzu bewegbar, um sie aus dem Zwischenraum zwischen den Tragebalken (51) zu heben.

**2.** Filterpresse nach Anspruch 1, dadurch gekennzeichnet, daß die Arretierelemente (23) als Paar Schwenkarme (63) ausgebildet sind, die drehbar an drehbaren Wellen (61) getragen sind.

**3.** Filterpresse nach Anspruch 1 oder 2, dadurch gekennzeichnet, daß die Arretierelemente durch pneumatische Federn (70) betätigt werden.

**4.** Filterpresse nach Anspruch 3, dadurch gekennzeichnet, daß die pneumatischen Federn (70) vom Faltenbalgtyp sind, die ein Paar Platten (72, 73), einen Faltenbalg (74) aus Gummi, der diese Platten (71, 72) zum Zuführen von Druckluft verbindet, und ein Paar von Rückstellfedern (75), die an gegenüberliegenden Seiten des Faltenbalgs (74) angeordnet sind, aufweisen.

5. Filterpresse nach einem der ansprüche 1 bis 4, dadurch gekennzeichnet, daß die Länge der Verbindungselemente (54) kürzer als der Abstand zwischen zwei nebeneinanderliegenden Filterplatten (10) ist, wenn diese voneinander getrennt sind.

6. Filterpresse nach einem der Ansprüche 1 bis 5,
dadurch gekennzeichnet, daß die Tragebalken (51) durch Federn (53), die von einander gegenüberliegenden Ständern (52) zweier nebeneinanderliegender Filterplatten (10) herabhängen, getragen sind.

7. Filterpresse nach einem der Ansprüche 1 bis 6,
dadurch gekennzeichnet, daß der Vibrator (22) auf einer Platte (20) befestigt ist, an deren Unterseite die Arretierelemente (23) befestigt sind.

8. Filterpresse nach einem der Ansprüche 1 bis 7,
dadurch gekennzeichnet, daß der Vibrator (22) Vibrationen erzeugt, die eine Amplitude von 2 bis 50 mm und eine Frequenz von 5 bis 83,3 Hz (300 bis 5000 Umdrehungen pro Minute) haben.

9. Filterpresse nach einem der Ansprüche 1 bis 8,
dadurch gekennzeichnet, daß die Einrichtung zur Verhinderung einer Schwingungsübertragung, die zwischen dem Vibratorgestell (20) und dem Anhebeelement (23) angeordnet werden soll, Schraubenfedern (21) aufweist.

10. Filterpresse nach einem der Ansprüche 1 bis 9,
dadurch gekennzeichnet, daß die Filterpresse vom Seitenbalkentyp ist, wobei die Filterplatten (10) vorwärts und rückwärts bewegbar von einem Paar einander gegenüberliegender Seitenbalken (6) getragen sind.

**Revendications**

1. Filtre-presse ayant les particularités suivantes:
    a) il comprend des plateaux de filtre (10), des toiles filtrantes (50) et un appareil de vibration (13) pour faire vibrer les toiles filtrantes (50);
    b) les toiles filtrantes voisines (50) sont suspendues à une paire de barres de suspension (51) opposées respectivement;
    c) les barres de suspension (51) de chaque paire sont reliées entre elles par des éléments de liaison (54) qui limitent l'espace maximal entre elles;
    d) l'appareil de vibration (13) possède un châssis (14) qui est supporté déplaçable vers l'avant et vers l'arrière sur des rails (12) installés au-dessus des barres de suspension (51);
    e) l'appareil de vibration comprend un vibrateur (22) monté sur un porte-vibrateur (20);
    f) le vibrateur (22) est relié à des moyens de retenue (23) destinés à venir en contact avec les barres de suspension (51) de manière à leur transmettre les vibrations; et
    g) l'appareil de vibration (13) comprend un moyen de levage (16, 17) pour déplacer les moyens de retenue (23) vers le haut et vers le bas;
    caractérisé par les particularités suivantes:
    h) le vibrateur (22) et le porte-vibrateur (20) sont suspendus au châssis (14) de manière que la transmission de vibrations au châssis (14) soit empêchée;
    i) les moyens de retenue (23) peuvent être engagés dans l'espace entre les barres de suspension (51) d'une paire et peuvent être dégagés de cet espace par le moyen de levage (16, 17); et
    j) les moyens de retenue (23) sont guidés et peuvent être déplacés par des moyens de manoeuvre (70) dans le sens de leur écartement mutuel, de manière à venir en contact de pressage avec les barres de suspension (51) respectives de la paire, et dans le sens de leur rapprochement mutuel en vue de leur soulèvement hors de l'espace entre les barres de suspension (51).

2. Filtre-presse selon la revendication 1, caractérisé en ce que les moyens de retenue (23) sont conçus comme une paire de bras pivotants (63) supportés rotatifs sur des axes horizontaux (61).

3. Filtre-presse selon la revendication 1 ou 2, caractérisé en ce que les moyens de retenue sont manoeuvrés par des ressorts pneumatiques (70).

4. Filtre-presse selon la revendication 3, caractérisé en ce que les ressorts pneumatiques (70) sont du type à soufflet, comprenant chacun une paire de plaques (72, 73), un soufflet (74) en caoutchouc reliant ces plaques (72, 73) entre elles et permettant l'admission d'air comprimé, ainsi qu'une paire de ressorts de rappel (75) prévus sur des côtés opposés du soufflet (74).

5. Filtre-presse selon une des revendications 1 à 4, caractérisé en ce que la longueur des éléments de liaison (54) est plus courte que la distance entre deux plateaux de filtre (10) voisins lorsqu'ils sont séparés l'un de l'autre.

6. Filtre-presse selon une des revendications 1 à 5, caractérisé en ce que les barres de suspension (51) sont supportées par des ressorts (53) suspendus eux-mêmes à des supports (52) opposés de deux plateaux de filtre (10) voisins.

7. Filtre-presse selon une des revendications 1 à 6, caractérisé en ce que le vibrateur (22) est monté sur une plaque (20) à la surface inférieure de laquelle sont attachés les moyens de retenue (23).

8. Filtre-presse selon une des revendications 1 à 7, caractérisé en ce que le vibrateur (22) produit des vibrations d'une amplitude de 2 à 50 mm et d'une fréquence de 5 à 83,3 Hz (300 à 5000 vibrations par minute).

9. Filtre-presse selon une des revendications 1 à 8, caractérisé en ce que le moyen pour empêcher la transmission de vibrations, devant être interposé entre le porte-vibrateur (20) et l'organe de levage (16), est constitué de ressorts hélicoïdaux (21).

10. Filtre-presse selon une des revendications 1 à 9, caractérisé en ce qu'il est du type à barres latérales, dans lequel les plateaux de filtre (10) sont supportés déplaçables vers l'avant et vers l'arrière par une paire de barres latérales (6) opposées.

FIG.1

**EP 0 225 972 B1**

FIG.2

10

## FIG. 3

FIG.4

FIG.5

FIG.6

EP 0 225 972 B1

# FIG. 7

FIG.8